Europäisches Patentamt

European Patent Office

Office européen des brevets

Veröffentlichungsnummer: **0 289 989**

**A2**

# EUROPÄISCHE PATENTANMELDUNG

Anmeldenummer: 88107084.1

Int. Cl.⁴ **G01N 15/08**

Anmeldetag: 03.05.88

Priorität: 07.05.87 DE 3715214

Veröffentlichungstag der Anmeldung:
09.11.88 Patentblatt 88/45

Benannte Vertragsstaaten:
AT BE CH DE ES FR GB GR IT LI LU NL SE

Anmelder: **Fläkt AB**
**Sickla Alle 1**
**S-131 34 Nacka(SE)**

Erfinder: **Ziemer, Wolf**
**Spessartstrasse 12**
**D-1000 Berlin 33(DE)**

Vertreter: **Füchsle, Klaus, Dipl.-Ing. et al**
**Hoffmann . Eitle & Partner Patentanwälte**
**Arabellastrasse 4**
**D-8000 München 81(DE)**

Verfahren und Vorrichtung zum Prüfen von Filtern.

In einem Verfahren zum Prüfen von Filtern auf Durchlässigkeit, insbesondere auf Leck-oder sonstige Stellen, die für in einem Luft-oder Gasstrom enthaltene, auszufilternde Partikel im Vergleich zu anderen Filterbereichen erhöht durchlässig sind, wird an eine Fläche des Filters Luft oder Gas mit solchen Partikeln herangeführt und die davon abgewandte Fläche des Filters mit einem den Durchtritt von Partikeln anzeigenden Indikatorsystem abgetastet. Das Verfahren ist derart ausgebildet, daß eine bereichsweise Abtastung der abgewandten Filterfläche mittels mindestens einer Ansaugdüse (31) erfolgt, daß bei Eintritt eines Partikelstromes in die Ansaugdüse eine im Stromweg dahinter angeordnete Meßvorrichtung (40) vom Partikelstrom für jeden Abtastbereich gesondert beeinflußt wird und daß das Ergebnis für jeden einen Partikelstrom aussendenden Abtastbereich gesondert angezeigt wird. Eine Vorrichtung zur Durchführung des Verfahrens umfaßt eine Abtaststation mit einer Aerosolkammer (19) und eine zur bereichsweisen Abtastung einer Fläche geeignete, auf einen Aerosolstrom ansprechende Abtasteinheit (29), zwischen denen eine Aufnahme (11) für das zu prüfende Filter (13) angeordnet ist.

FIG. 1

## Verfahren und Vorrichtung zum Prüfen von Filtern

Die Erfindung betrifft ein Verfahren zum Prüfen von Filtern auf Durchlässigkeit, insbesondere auf Leck-oder sonstige Stellen, die für in einem Luft-oder Gasstrom enthaltene, auszufilternde Partikel im Vergleich zu anderen Filterbereichen erhöht durchlässig sind, wobei an eine Fläche des Filters Luft oder Gas mit solchen Partikeln herangeführt und die davon abgewandte Fläche des Filters mit einem den Durchtritt von Partikeln anzeigenden Indikatorsystem abgetastet wird. Ferner betrifft die Erfindung eine Vorrichtung zur Durchführung dieses Verfahrens.

Reine Arbeits-und sonstige Räume sollen in besonders hohem Maße frei von Staub und anderen störenden Schwebstoffen sein. Zur Filterung der Luft für solche Räume wird Filterpapier verwendet, das aus Mikroglasfasern besteht. Papiersorten dieser Art sind unter den Bezeichnungen HEPA-Papier und ULPA-Papier bekannt. Bei der Fabrikation dieser Papiere entsteht das Problem, daß einerseits Poren verbleiben müssen, die die Penetration des zu filternden Mediums zulassen, daß aber andererseits Löcher auch kleinsten Durchmessers, sog. Pinholes, vermieden werden sollen. Je höher die Anforderungn an die Reinheit des gefilterten Mediums gestellt werden, desto weniger sind derartige Pinholes vom Anwender hinnehmbar.

Filterpapiere für derartige Anwendungszwecke müssen deshalb vor ihrem Einsatz darauf überprüft werden, daß sie frei von Pinholes sind und über ihre ganze Fläche hinweg die erforderliche Qualität hinsichtlich ihrer Filtereigenschaften aufweisen.

Zur Überprüfung von Filterpapieren auf Pinholes wurde bereits ein Verfahren der eingangs genannten Art bekannt, bei dem als Indikator zum Erkennen der Pinholes ein Aerosol-Fotometer eingesetzt wurde. Dieses Verfahren erlaubt jedoch nur die Ermittlung von Pinholes bis zu einem Minimal-Durchmesser von 300 bis 500 μm. Zur Entdeckung wesentlich kleinerer Pinholes kann es nicht eingesetzt werden und entspricht daher nicht den Anforderungen zur Prüfung von Filterpapieren auf extrem kleine Leck-oder sonstige Fehlstellen.

Ebenfalls vorbekannt ist der sog. Ölfadentest, mit dem Pinholes bis zu einer Minimal-Größe von 100 bis 200 μm entdeckt werden können. Dieses Verfahren ist jedoch zeitaufwendig und genügt ebenfalls noch nicht höheren Anfordungen.

Der Erfindung liegt daher die Aufgabe zugrunde, ein Verfahren und eine Vorrichtung zu - schaffen, die die Detektierung von Pinholes mit extrem kleinem Durchmesser erlauben.

Diese Aufgabe wird mit den Merkmalen des Anspruchs 1 bzw. des Anspruchs 9 gelöst.

Durch die erfindungsgemäße Lösung wird der Vorteil erzielt, in Filterpapieren auch noch Pinholes zu detektieren, die nur einen Durchmesser von wenigen μm aufweisen. Dabei arbeiten das erfindungsgemäße Verfahren und die erfindungsgemäße Vorrichtung sicher und zeitsparend. Die Durchführung bzw. Handhabung ist für den Benutzer sehr einfach.

Weitere Ausgestaltungen der Erfindung gehen aus den Unteransprüchen hervor.

Ein Ausführungsbeispiel der Erfindung wird anhand der beigefügten Zeichnungen nachfolgend näher beschrieben. In den Zeichnungen zeigen

Fig. 1 einen Längsschnitt durch eine Filterprüfanlage,

Fig. 2 den Gegenstand der Fig. 1 im Querschnitt längs der Linie A-A in vergrößerter Darstellung,

Fig. 3 eine Ansaugdüse des Gegenstandes der Fig. 1 und 2 in vergrößerter Darstellung.

Die dargestellte Filterprüfanlage umfaßt ein - schrankartiges Gehäuse 1, das durch ein stabiles, verwindungssteifes Gestell aus Aluminiumprofilen und Verkleidungen aus Alucobond-Platten gebildet ist und ein an der Frontseite ein durch Klappen oder Verschieben zu öffnendes Sichtfenster 2 aufweist.

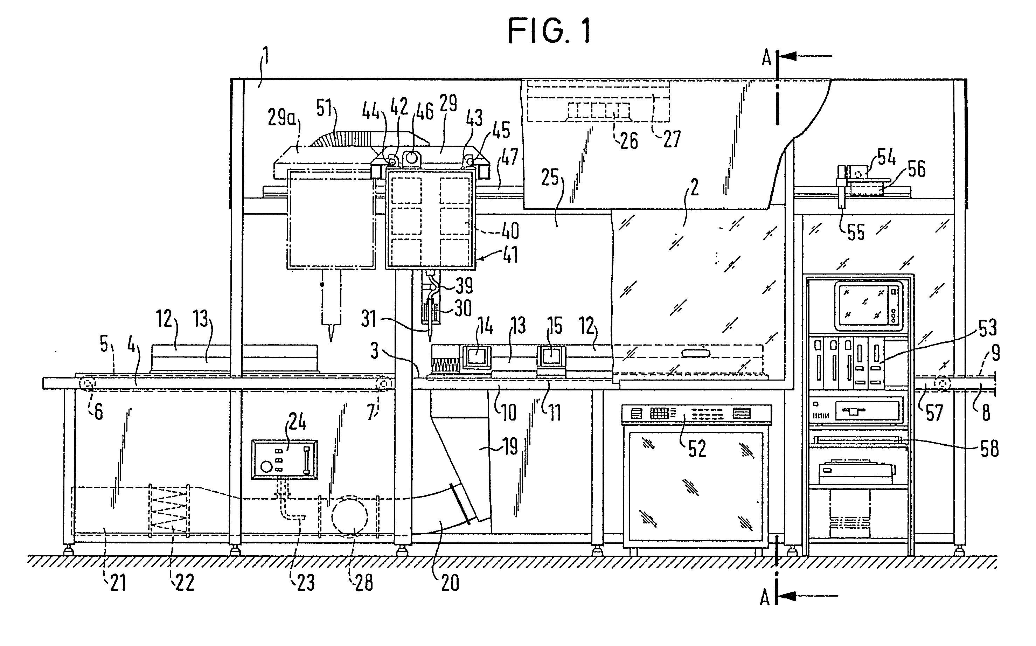

Etwa in Tischhöhe ist am und im Gehäuse 1 eine horizontale Transportbahn 3 für die zu prüfenden Filter vorgesehen. An dem in Fig. 1 linksseitigen Anfang der Transportbahn 3 befindet sich eine Eingabestation 4 mit einem endlosen Transportband 5, das über Walzen 6, 7 läuft und zum Umlauf an eine nicht dargestellte Antriebseinheit angeschlossen ist. An dem in Fig. 1 rechtsseitigen Ende der Transportbahn 3 ist eine Ausgabestation 8 vorgesehen, die analog zur Eingabestation 4 aufgebaut ist und 9benfalls ein umlaufendes, an die Antriebseinheit angeschlossenes Transportband 9 aufweist. Zwischen Eingabestation 4 und Ausgabestation 8 liegt im Weg der Transportbahn eine Abtaststation 10 mit einer fensterartigen Filteraufnahme 11.

Die zu prüfenden Filter 13 sind in beidseitig offene Filterrahmen 12 eingesetzt, deren Innenabmessungen, ggf. unter Verwendung eines Passepartout, dem Format des jeweils eingelegten Filters 13 angepaßt sind.

Mit Filtern 13 bestückte Filterrahmen 12 werden zur Eingabe in die Anlage auf das Transportband 5 der Eingabestation 4 aufgelegt. Zum Weitertransport des Filterrahmens 12 zur Filteraufnahme 11 der Abtaststation 10 sowie zur genauen Positionierung für die Abtastung sind Transport-und Spanneinheiten 14, 15 mit endlosen umlaufenden Transportbändern 16, 17 vorgesehen, die von Gleichstrommotoren 18 angetrieben werden. Die Transport-und Spanneinheiten können um ihre Achse um 90° geschwenkt werden, so daß der Filterrahmen 12 nach Erreichen der Position über der Filteraufnahme 11 auf diese abgesenkt werden kann. Eine um die fensterartige Filteraufnahme 11 umlaufende Gummidichtung, die in den Zeichnungen nicht dargestellt ist, sorgt dafür, daß das jeweils zu prüfende Filter nach der Absenkung auf der Filteraufnahme 11 luftdicht aufsitzt.

Unter der Filteraufnahme 11 der Abtaststation 10 befindet sich eine Aerosolkammer 19 mit einem Aerosol-Zuführungskanal 20. Dieser ist an ein Zuluftsystem angeschlossen. Es besteht aus einem Luft-Ansaugstutzen 21, einem druckseitigen Schwebstofffilter 22 und einem stufenlos drehzahlregulierbaren, nicht dargestellten Radialventilator bekannter Bauart. In dieses Zuluftsystem mündet eine Aerosoleinführung 23, durch welche der gefilterten Luft ein Aerosol aus einem Aerosolgenerator 24 zugemischt wird.

Über der Ebene der Filteraufnahme 11 und somit über der Ebene des dort jeweils positionierten Filters befindet sich eine Abluftkammer 25, aus welcher die aerosolhaltige Luft nach dem Durchtritt durch das Fenster der Filteraufnahme 11 und ggf. durch das dort angeordnete Filter mittels eines Radialventilators 26 über ein Schwebstofffilter 27 aus der Prüfanlage nach außen zurückgefördert wird. Während des Filtertransfers, d. h. bei nicht besetzter Filteraufnahme 11, kann die aerosolhaltige Zuluft über eine Umschaltklappe 28 im Zuluftsystem direkt in die Abluftkammer überführt werden. Dies ermöglicht während des Transfers des Filters zur und von der Filteraufnahme 11 ein kontinuierliches Weiterarbeiten des Aerosolgenerators zur Aufrechterhaltung einer zeitstabilen Aerosolverteilung und Aerosolkonzentration.

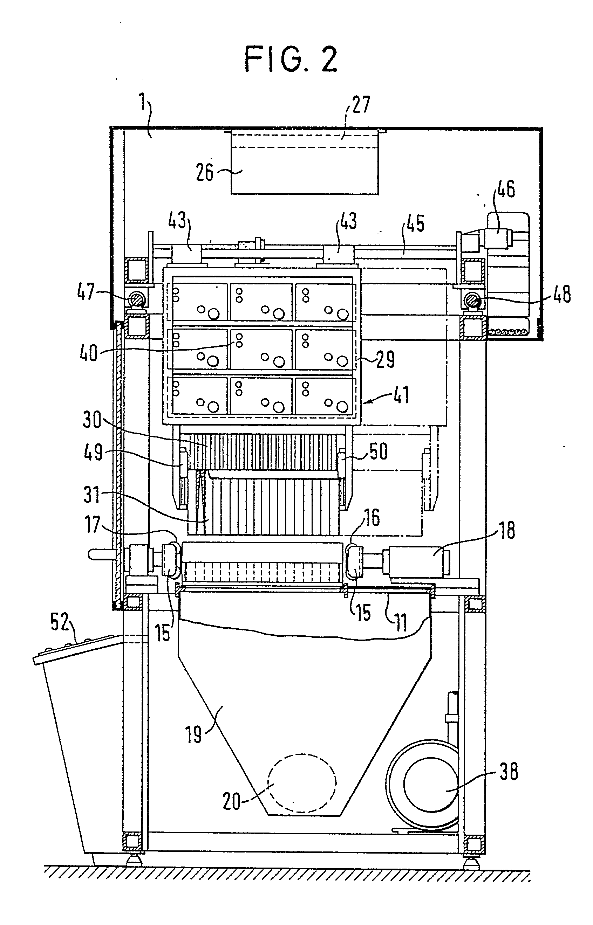

Ferner umfaßt die Abtaststation 10 eine verstellbare Abtasteinheit 29. Sie enthält eine Düsenleiste 30 (Fig. 2), an der beim dargestellten Ausführungsbeispiel 18 an unter sich gleiche Ansaugdüsen 31 in einer Reihe nebeneinander quer zur Filtertransportrichtung befestigt sind. Jede Ansaugdüse 31 ist 30 mm breit, so daß das aus den 18 Einzeldüsen bestehende Düsenaggregat eine Gesamtbreite von 540 mm aufweist.

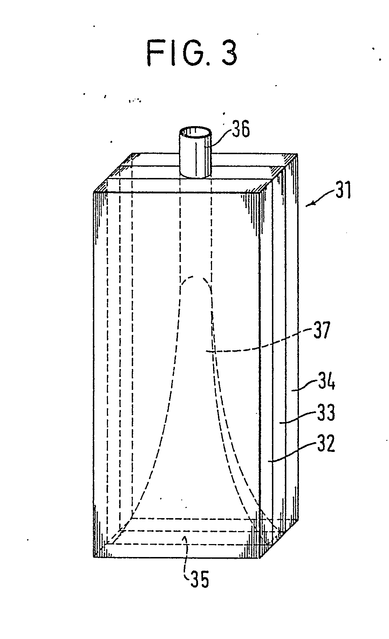

Wie aus Fig. 3 näher ersichtlich ist, besteht jede Ansaugdüse 31 aus drei aneinandergelegten und miteinander verbundenen, lamellenartigen Blechen 32, 33, 34 aus AlMgSi 0,5. Das mittlere Blech 33 ist so ausgefräst, daß zwischen der eintrittsseitigen Düsenmündung 35 und einem austrittsseitigen Rohrstutzen 36 ein Strömungskanal 37 entsteht, der sich zum Rohrstutzen 36 hin nach der Form von Exponentialkurven verjüngt. Die Ausformung als Exponentialkanal gewährleistet eine stetige Beschleunigung der Strömung in der Düse und verhindert Grenzschichtabriß und Verwirbelung, d. h. Partikelverluste im Kanal. Die Deckbleche 32, 34 sind an der Düsenmündung außen einseitig unter 15° scharf angeschliffen (mit einem Radius < 0,1 mm), um Partikelimpaktion am Düsenrand zu minimieren.

Die Materialwahl für die Düsenbleche 32, 33, 34 gewährleistet elektrostatische Neutralität, ihre Oberflächen sind mechanisch poliert, elektropoliert und natureloxiert.

Die an eine Vakuumpumpe 38 über nicht dargestellte Leitungen angeschlossenen Ansaugdüsen 31 sind isokinetisch und beim dargestellten Ausführungsbeispiel für einen Probenahmenvolumenstrom von 25 cm$^3$/s ausgelegt. Die isokinetische Strömungsgeschwindigkeit in der Düsenmündung beträgt ca. 0,52 m/s.

Die Ansaugdüsen 31 sind über je einen an den zugehörigen Rohrstutzen 36 angesetzten Tygonschlauch 39, der glatt, diffusionsdicht, astatisch und ableitfähig ist, mit jeweils einem Partikelzähler 40 verbunden. Diese sind in an sich bekannter Weise ausgebildet und daher in den Zeichnungen im einzelnen nicht näher dargestellt. Vorzugsweise werden als Partikelzähler Kondensationskernzähler verwendet, wie sie beispielsweise von den Firmen TSI Inc., St. Paul, USA, und TSI GmbH, Aachen, unter der Typ-Bezeichnung TSI-CR/CNC Modell 3760 auf den Markt gebracht werden. Es handelt sich dabei um Partikelzähler, die im Durchmesserbereich der Partikel zwischen 0,01 und 0,02 mikrometer ($\mu$m) sowohl sehr hohe als auch sehr niedrige Konzentrationen mit gleicher Zuverlässigkeit, also mit hohem Zählwirkungsgrad, messen.

Die Partikelzähler 40 sind in frontseitig einander gegenübergestellten Anordnungen von jeweils 3 x 3 Einheiten in einem Regal 41 untergebracht. Das Regal 41 ist mit hohlzylindrischen Lagern 42, 43 an zwei rohrförmigen Brücken 44, 45 aufgehängt, die quer zur Filtertransportrichtung im oberen Teil der Gehäuses 1 angeordnet sind. Mittels eines Elektromotors 46 ist das Regal 41 auf den Brücken 44, 45 verfahrbar. Andererseits sind die Brücken 44, 45 mittels eines nicht dargestellten Gleichstrommotors auf Schienen 47, 48 verfahrbar, die parallel zur Filtertransportrichtung im Gehäuse 1 angeordnet sind. Das Regal 41 ist somit in zwei Koordinatenrichtungen verstellbar.

Die Düsenleiste 30 mit den Ansaugdüsen 31 ist am Regal 41 untergehängt und mittels Vertikalführungen 49, 50 senkrecht zur Ebene der Filtertransportbahn 3 verstellbar, weshalb die Schlauchverbindungen 39 zwischen den Düsen 31 und den Partikelzählern 40 flexibel sind.

Die aus den Abtastdüsen 31 und den ihnen zugeordneten Partikelzählern 40 gebildete Abtasteinheit 29 ist somit als Ganzes sowohl parallel zur Filtertransportrichtung (x-Koordinate) als auch quer hierzu (y-Koordinate) über dem in der Abtaststation 10 positionierten Filter 13 zur Herbeiführung einer Abtastbewegung verstellbar.

Die Abluftsysteme der Partikelzähler 40 münden in eine gemeinsame Ansaugleitung der Vakuumpumpe 38. Diese Leitung sowie die ebenfalls nicht dargestellten Elektroanschlüsse und Datenkabel der Partikelzähler 40 werden bei der Abtastbewegung der Abtasteinheit 29 durch einen nicht dargestellten Schutzschleppkorb 51 gesichert.

Bei der dargestellten Ausführungsform der Erfindung ist die maximal abtastbare Filterfläche 900 x 1800 mm. Filter dieses Formats werden dabei im Doppelwegverfahren gescannt, d. h. die Düsenleiste 30 fährt von der Ausgangsposition x = 0 mm zunächst bis zur Position x = 1800 mm über das in der Abtaststation 10 positionierte Filter 13, wobei in der y-Koordinate die Position y = 0 mm für die Abtastdüsen 31 beibehalten wird. Anschließend fährt die Düsenleiste 30 in der Position x = 1800 mm von der Position y = 0 mm in die Position y = 300 mm, worauf die Abtastdüsen 31 von der Position x = 1800 mm in die Position x = 0 mm zurückkehren.

Hingegen genügt bei einer Filtergröße von 600 mm Breite ein Bewegen der Abtasteinheit 29 nur in der x-Richtung ohne anschließende Verstellung in der y-Richtung.

Die Scangeschwindigkeit in x-Richtung kann bei der dargestellten Ausführungsform zwischen 1 und 20 mm/s eingestellt werden. Die Positioniergenauigkeit ist kleiner oder gleich 100 µm.

Die Steuerung der Antriebe für den automatischen oder halbautomatischen Filtertransfer auf der Filtertransportbahn 3 erfolgt über ein Schaltpult 52.

Die Auswertung der von den Partikelzählern 40 bei der Filterabtastung ermittelten Meßergebnisse erfolgt über einen ein Speichersystem enthaltenden Rechner 53, der vorzugsweise als PC ausgebildet ist und an dessen Dateneingänge die Datenausgänge der Partikelzähler 40 über nicht dargestellte Kabel angeschlossen sind. Zum Übertragen der Meßergebnisse der Partikelzähler 40 an den Rechner 53 kann eine an sich bekannte Multiplex-Schaltung vorgesehen werden, so daß zwischen den Partkelzählern 40 und dem Rechner 53 nur eine einzige Datenleitung vorzusehen ist.

Der Rechner 53 erhält zusätzlich zu den Meßergebnissen auch die Meldung der jeweiligen Position einer die Anregung eines Partikelzählers 40 veranlassenden Leckstelle im abgetasteten Filter 13, wobei die x-Position durch den Drehinkrementgeber des Gleichstrommotors für die Verstellung der Abtasteinheit 29 in der x-Richtung bestimmt wird, während die y-Position durch die Mitte der Ansaugdüse 31 des jeweils angeregten Partikelzählers 40 definiert ist, ggf. unter Berücksichtigung der Querverstellung der Abtasteinheit 29 zwischen Vor- und Rücklauf.

Die vom Rechner 53 derart ermittelten und gespeicherten Positionen von Leckstellen im abgetasteten Filter werden zur Anzeige an eine Anzeigeeinheit 54 weitergegeben, die bei der beschriebenen Ausführungsform durch einen Laserzeiger 55 gebildet ist. Der Laserzeiger 55 ist in y-Richtung auf einer Linearbank 56 montiert und in x-Richtung auf den gleichen Schienen 47, 48 verschiebbar angeordnet, auf welchen auch die Abtasteinheit 29 gelagert ist. Der Laserzeiger 55 ist in gleicher Weise in x-und y-Richtung verstellbar wie die Abtasteinheit 29.

In Fig. 1 befindet sich die Anzeigeeinheit 54 in einer Parkposition. Für den Anzeigevorgang ist sie auf den durchgehenden Schienen 47, 48 in eine Position verfahrbar, die über dem in der Abtaststation 10 verbliebenen Filter liegt.

Hierzu ist es allerdings notwendig, vorher die Abtasteinheit 29 auf den Schienen 47, 48 in eine in Fig. 1 gestrichelt dargestellte Parkposition 29a zu fahren.

Stattdessen können die Abtasteinheit 29 und die Anzeigeeinheit 54 in den in Fig. 1 dargestellten Positionen auch verbleiben, wenn für das zu prüfende Filter 13 im Transportweg nach der Abtaststation 10 eine separate Anzeigestation 57 vorgesehen wird, die unter der Anzeigeeinheit 54 in der in Fig. 1 dargestellten Position einzurichten ist. In diesem Fall ist die in Fig. 1 dargestellte Position für die Anzeigeeinheit 54 deren Arbeitsposition, weshalb bei dieser Variante der Rechner 53 in einem Vorbau neben der Filtertransportbahn 3 anzuordnen ist.

Zur Anzeige der von durch das System ermittelten Fehlstellen nimmt der Laserschreiber 55, gesteuert durch den Rechner 53, nacheinander die Positionen ein, die den Positionen der von der Abtasteinheit 29 ermittelten Fehlstellen im abgetasteten Filter entsprechen. Diese Positionen werden durch den vom Laserzeiger 55 nach unten gerichteten Laserstrahl auf dem Filter optisch angezeigt.

Energie und Durchmesser des Laserstrahls des Laserzeigers 55 können auf die Besonderheiten des Filterpapiers des auf Leckstellen abgetasteten Filters in geeigneter Weise abgestimmt werden, damit während des Anzeigevorganges nicht unbeabsichtigt Löcher (Pinholes) in das Filter eingebrannt werden. Als Laser kommt beispielsweise eine He-Ne-Ausführung, 5 mW, 0,75 mm Strahldurchmesser, in Betracht.

Die Steuerungseinheiten für die Abtastbewegungen der Abtasteinheit 29 sowie für den Rechner 53 und für den Laserzeiger 55 sind zusammen mit dem Rechner 53 und seinen Terminals (Bildschirm, Drucker, etc.) in bzw. an einem weiteren Schaltpult 58 des Gehäuses 1 untergebracht.

Die Wirkungsweise der erfindungsgemäßen Anlage ist folgendermaßen:

Soll ein Filter auf das etwaige Vorhandensein von visuell häufig nicht mehr erkennbaren Leckstellen, insbesondere von Löchern (Pinholes) geprüft werden, wird es in einen Filterrahmen 12 eingelegt und mit diesem über die Eingabestation 4 in die Abtaststation 10 eingebracht, wo es mit der Unterseite am offenen, durch die Filteraufnahme 11 gebildeten Fenster der Aerosolkammer 19 liegt. Dort dringt aerosolhaltige Luft aus der Aerosolkammer 19 überwiegend an solchen Stellen durch das Filter, an denen es Leckstellen in Form von Löchern (Pinholes) oder sonstige Bereiche erhöhter Penetration aufweist. Hingegen vermögen durch die übrigen Bereiche der Filterfläche aufgrund ihrer Filterwirkung allenfalls in geringem Umfang Aerosolpartikel zu strömen, so daß normale ultraniedrige Penetration von Aerosolpartikeln stattfindet. Leckstellen senden also einen deutlich stärkeren Strom von Aerospartikeln aus.

Setzt die Abtastbewegung der Abtasteinheit 29 ein, so saugen die Ansaugdüsen 31 der Düsenleiste 30 beim Überfahren von Leckstellen des Filters Luft mit einem relativ hohen Anteil an Aerosolpartikeln aus der Aerosolkammer 19 ein, während an allen übrigen Stellen der Filterfläche Luft mit einem deutlich geringeren Anteil an Aerosolpartikeln aus der Aerosolkammer 19 durch das Filterpapier hindurch angesaugt wird.

Dabei kann eine Leckstelle im Filter beispielsweise so definiert werden, daß bei deren Abtastung der Meßwert auf das Doppelte des bei der Abtastung einwandfreier Filterbereiche ermittelten Wertes ansteigt. Ein entsprechender Schwellwert kann an den Partikelzählern 40 oder an der ihnen nachgeschalteten Auswerteelektronik eingestellt werden.

Somit werden die den jeweiligen Ansaugdüsen 31 zugeordneten Partikelzähler 40 nur während des Abtastens von Leckstellen im Filter angeregt, was zusammen mit den jeweiligen Positionsdaten automatisch an den ein Speichersystem enthaltenden Rechner 53 gemeldet wird. Diese Daten werden im Rechner 53 in einer für die spätere Anzeige durch die Anzeigeeinheit 54 verarbeitet und gespeichert.

Wird nach Beendigung der Abtastung des zu prüfenden Filters durch die Abtasteinheit 29 entweder die Anzeigeeinheit 54 über das Filter verfahren (erste Variante) oder das Filter in seinem Filterrahmen 12 gemäß der beschriebenen zweiten Variante unter die Anzeigeeinheit 54 in die Anzeigestation 57 überführt, so wird die Anzeigeeinheit 54 wirksam. Dabei steuert der Rechner 53 den Laserzeiger 55 nacheinander in die Positionen, die den vorher ermittelten Leckstellen im Filter entsprechen. Diese Leckstellen werden somit dem Benutzer durch den Laserstrahl des Laserzeigers 55 auf der Oberfläche des unter dem Verstellbereich des Laserzeigers liegenden Filters dadurch optisch angezeigt, daß ihr jeweiliges Umfeld vom Laserstrahl beleuchtet wird. Die beleuchteten Leckstellen können dann vom Benutzer markiert werden, beispielsweise durch vorübergehendes Einstecken von Fähnchen oder Anbringen sonstiger Markierungen. Der Strahl des Laserzeigers 55 verbleibt auf der jeweils angezeigten Leckstelle, bis der Benutzer durch Eingabe eines entsprechenden Befehls in den Rechner 53 das automatische Weiterführen des Laserzeigers 55 zur nächsten, im Rechner 53 positionsmäßig gespeicherten Leckstelle veranlaßt.

Nach Beendigung des Anzeigevorganges verläßt das geprüfte Filter mit den an den detektierten Leckstellen eingesteckten Markierungsfähnchen bzw. sonstigen Markierungen die Anlage durch die Ausgabestation 8. Anschließend können die vorher markierten und daher leicht auffindbaren Leckstellen im Filter beseitigt werden, z. B. durch Verkleben oder Vergießen der die Löcher (Pinholes) enthaltenden Flächenbereiche, oder das Filter kann bei zu großer Anzahl von ermittelten Leckstellen von der späteren Verwendung ausgeschlossen werden.

Als Meßergebnisse, die von den Partikelzählern 40 geliefert werden, genügen häufig digitale Ja/Nein-Signale, die über oder unter dem eingestellten, eine Leck definierenden Schwellwert liegen. Der genauen Erfassung von Analogsignalen bedarf es nicht unbedingt.

Die erfindungsgemäße Einrichtung kann aber auch zur Auswertung von Analogsignalen, ggf. ohne Schwellwerteinstellung, eingesetzt werden, wenn bei der Prüfung des Filters nicht nur Leckstellen, etwa im Sinne der obigen Definition, detektiert werden sollen, sondern für eine feiner abgestimmte Effizienzmessung bzw. für die Bestimmung des Abscheidungsgrades Penetrationswerte und deren Verteilung über die Fläche des Filters 13 ermittelt werden sollen.

Die Größe der von den Ansaugdüsen 31 nacheinander abgetasteten Filterbereiche ist vom Querschnitt der Düsenmündungen 35 dieser Ansaugdüsen abhängig. Bei entsprechend kleiner Dimensionierung der Düsenmündungen 35 kann die Filterfläche annähernd punktweise abgetastet werden.

Selbstverständlich sind auch andere Ausführungsformen der Erfindung möglich. Insbesondere kann zur Herbeiführung der Abtastbewegung zwischen Filter 13 und Abtasteinheit 29 auch das Filter gegenüber der Abtasteinheit verstellt werden.

## Ansprüche

1. Verfahren zum Prüfen von Filtern auf Durchlässigkeit, insbesondere auf Leck-oder sonstige Stellen, die für in einem Luft-oder Gasstrom enthaltene, auszufilternde Partikel im Vergleich zu anderen Filterbereichen erhöht durchlässig sind, wobei an eine Fläche des Filters Luft oder Gas mit solchen Partikeln herangeführt und die davon abgewandte Fläche des Filters mit einem den Durchtritt von Partikeln anzeigenden Indikatorsystem abgetastet wird, dadurch **gekennzeichnet,** daß eine bereichsweise Abtastung der abgewandten Filterfläche mittels mindestens einer Ansaugdüse (31) erfolgt, daß bei Eintritt eines Partikelstromes in die Ansaugdüse eine im Stromweg dahinter angeordnete Meßvorrichtung (40) vom Partikelstrom für jeden Abtastbereich gesondert beeinflußt wird und daß das Ergebnis für jeden einen Partikelstrom aussendenden Abtastbereich gesondert angezeigt wird.

2. Verfahren nach Anspruch 1, dadurch gekennzeichnet, daß die Abtastbereiche annähernd punktförmig sind.

3. Verfahren nach einem der vorangehenden Ansprüche, dadurch gekennzeichnet, daß die Ergebnisse für die einen Partikelstrom aussendenden Abtastbereiche zusammen mit den Positionsdaten dieser Abtastbereiche in einen der Anzeige vorgeschalteten Speicher eingegeben werden.

4. Verfahren nach Anspruch 3, dadurch gekennzeichnet, daß die gespeicherten Ergebnisse und Daten für die einzelnen, einen Partikelstrom aussendenden Abtastpunkte in zeitlicher Aufeinanderfolge zur Anzeige gebracht werden.

5. Verfahren nach einem der vorangehenden Ansprüche, dadurch gekennzeichnet, daß die Anzeige der einen Partikelstrom aussendenden Abtastbereiche durch einen von den Meßergebnissen und Positionsdaten gesteuerten Lichtzeiger (55) erfolgt.

6. Verfahren nach Anspruch 4, dadurch gekennzeichnet, daß die Anzeige durch den Lichtzeiger auf der abgetasteten Filterfläche erfolgt.

7. Verfahren nach einem der vorangehenden Ansprüche, dadurch gekennzeichnet, daß zur Abtastung der Filterfläche mehrere Ansaugdüsen gleichzeitig verwendet werden.

8. Verfahren nach einem der vorangehenden Ansprüche, dadurch gekennzeichnet, daß zur Erzeugung eines Partikelstromes in an sich bekannter Weise ein Aerosol verwendet wird.

9. Vorrichtung zur Durchführung des Verfahrens nach einem der vorangehenden Ansprüche, dadurch gekennzeichnet, daß sie eine Abtaststation mit einer Aerosolkammer (19) und eine zur bereichsweisen Abtastung einer Fläche geeignete, auf einen Aerosolstrom ansprechende Abtasteinheit (29) umfaßt, zwischen denen eine Aufnahme (11) für das zu prüfende Filter (13) angeordnet ist.

10. Vorrichtung nach Anspruch 9, dadurch gekennzeichnet, daß die Abtasteinheit mindestens eine Ansaugdüse (31) und einen hiermit verbundenen Partikelzähler (40) umfaßt.

11. Vorrichtung nach Anspruch 10, dadurch gekennzeichnet, daß an einer Filterleiste (30) mehrere Ansaugdüsen (31) vorgesehen sind und daß jede Ansaugdüse (31) mit je einem Partikelzähler (40) verbunden ist.

12. Vorrichtung nach einem der vorangehenden Ansprüche, dadurch gekennzeichnet, daß Ansaugdüsen (31) und Partikelzähler (40) auf einem gemeinsamen, in zwei Freiheitsgraden verstellbaren Träger (41) angeordnet sind.

13. Vorrichtung nach einem der vorangehenden Ansprüche, dadurch gekennzeichnet, daß die Partikelzähler (40) als an sich bekannte Kondensationskernzähler ausgebildet sind.

14. Vorrichtung nach einem der vorangehenden Ansprüche, dadurch gekennzeichnet, daß die Datenausgänge der Partikelzähler (40) zusammen mit Positionsmeldern an den Dateneingang eines Speichers (53) angeschlossen sind.

15. Vorrichtung nach einem der vorangehenden Ansprüche, dadurch gekennzeichnet, daß eine Anzeigeeinheit (54) vorgesehen ist, die vom Speicher (53) gesteuert ist.

16. Vorrichtung nach Anspruch 15, dadurch gekennzeichnet, daß die Anzeigeeinheit (54) einen Laserzeiger (55) umfaßt.

17. Vorrichtung nach Anspruch 15, dadurch gekennzeichnet, daß die Anzeigeeinheit (54) eine Anzeige auf der Fläche des Filters (13) erzeugt.

18. Vorrichtung nach Anspruch 17, dadurch gekennzeichnet, daß die Abtasteinheit (29) und die Anzeigeeinheit (54) wechselweise über dem Filter (13) in der Abtaststation positionierbar sind.

19. Vorrichtung nach Anspruch 18, dadurch gekennzeichnet, daß die Abtasteinheit (29) und die Anzeigeeinheit (54) wechselweise zwischen Arbeits-und Parkpositionen bewegbar sind.

20. Vorrichtung nach Anspruch 17, dadurch gekennzeichnet, daß das Filter (13) in einer Anzeigestation (57) in den Weg des Lichtstrahls des Lichtzeigers (55) einbringbar ist.

21. Vorrichtung nach einem der vorangehenden Ansprüche, dadurch gekennzeichnet, daß das Filter (13) zum Transport durch die Abtaststation und/oder Anzeigestation in einen Filterrahmen (12) eingesetzt ist.

# FIG. 1

# FIG. 2

# FIG. 3